# EUROPEAN PATENT SPECIFICATION

(11) **EP 1 537 613 B1**
(45) Date of publication and mention of the grant of the patent: **27.06.2007**
(21) Application number: 03725372.1
(22) Date of filing: 06.05.2003
(51) Int. Cl.: H01M 4/46

(54) **MANUFACTURE OF A GAS DIFFUSION ELECTRODE**
HERSTELLUNG VON GASDIFFUSIONSELEKTRODEN
REALISATION D'UNE ELECTRODE DE DIFFUSION DE GAZ

(30) Priority: 31.05.2002 GB 0212636
(43) Date of publication of application: 08.06.2005
(73) Proprietor: JOHNSON MATTHEY PUBLIC LIMITED COMPANY, London SW1Y 5BQ (GB)
(72) Inventor: GASCOYNE, John Malcolm, High Wycombe, Bucks HP14 4BB (GB); HOGARTH, Martin Philip, Sonning Common, Reading RG4 9RU (GB)
(74) Representative: Wishart, Ian Carmichael
(86) International application number: PCT/GB2003/001959
(87) International publication number: WO 2003/103077

(56) References cited:
- EP-A- 0 577 291
- WO-A-00/45448
- WO-A-01/18894

## Description

The present invention relates to a process for the manufacture of an electrode, wherein the electrode is suitable for use as a component of a fuel cell membrane electrode assembly.

Electrochemical cells invariably comprise at their fundamental level a solid or liquid electrolyte and two electrodes, the anode and cathode, at which the desired electrochemical reactions take place. A fuel cell is an energy conversion device that efficiently converts the stored chemical energy of a fuel and an oxidant into electrical energy. The fuel is usually hydrogen, stored as a gas, or methanol stored as a liquid or gas, and the oxidant is air or oxygen. The hydrogen or methanol is oxidised at the anode and the oxygen is reduced at the cathode. In these cells gaseous reactants and/or products have to be diffused into and/or out of the cell electrode structures. The electrodes therefore are specifically designed to be porous to gas and/or liquid diffusion in order to optimise the contact between the reactants and the reaction sites in the electrode to maximise the reaction rate. The electrolyte which has to be in contact with both electrodes to maintain electrical contact in the fuel cell may be acidic or alkaline, liquid or solid, in nature. In the proton exchange membrane fuel cell (PEMFC), whether hydrogen or methanol fuelled, the electrolyte is a solid proton conducting polymer membrane, commonly based on perfluorosulphonic acid materials. The PEMFC is the most likely type of fuel cell to find wide application as a more efficient and lower emission power generation technology in a range of markets including stationary and portable power devices and as alternative to the internal combustion engine in transportation.

In the PEMFC the combined laminate structure formed from the membrane and the two electrodes is known as a membrane electrode assembly (MEA). The MEA will typically comprise several layers, but can in general be considered, at its basic level, to have five layers, which are defined principally by their function. On either side of the membrane an anode and cathode electrocatalyst is incorporated to increase the rates of the desired electrode reactions. In contact with the electrocatalyst containing layers, on the opposite face to that in contact with the membrane, are the anode and cathode gas diffusion substrates (GDS). The anode GDS is designed to be porous and to allow the reactant hydrogen or methanol to enter from the face of the substrate exposed to the reactant fuel supply, and then to diffuse through the thickness of the substrate to the layer which contains the electrocatalyst, usually platinum metal based, to maximise the electrochemical oxidation of hydrogen or methanol. If the reactant is methanol, the anode GDS must also allow carbon monoxide to escape. The cathode GDS is also designed to be porous and to allow oxygen or air to enter the substrate and diffuse through to the electrocatalyst layer reaction sites. Additionally, the cathode GDS must allow product water to be removed.

The complete MEA can be constructed by several methods. The electrocatalyst layers can be bonded to one surface of the GDS to form what is known as a gas diffusion electrode (GDE). The MEA is then formed by bonding two GDEs with the solid proton-conducting membrane. Alternatively, the MEA may be formed from two porous GDSs and a solid proton-conducting polymer membrane catalysed on both sides (hereinafter referred to as a catalyst coated membrane or CCM); or indeed the MEA may be formed from one GDE and one GDS and a solid proton-conducting polymer catalysed on the side facing the GDS.

The electrocatalyst materials for the anode and cathode structures typically comprise precious metals, in particular platinum, as these have been found to be the most efficient and stable electrocatalysts for all low-temperature fuel cells such as the PEMFC. Platinum is employed either on its own as the only electrocatalyst metal or in combination with other precious metals or base metals. The platinum based electrocatalyst is provided as very small particles (~20-50Å) of high surface area, which are often distributed on and supported by larger macroscopic electronically conducting carbon particles to provide a desired catalyst loading. Conducting carbons are the preferred materials to support the catalyst. Particulate carbon black materials typically employed include Vulcan XC72R and Shawinigan. It is also possible that the platinum based electrocatalyst may not incorporate a support, and in this case it is referred to as an unsupported Pt electrocatalyst.

The electrocatalyst layers suitably comprise some level of the proton conducting polymer in contact with the electrocatalyst reaction sites. This enables the efficient transport of protons from the anode reaction sites through the polymer membrane to the cathode reaction sites.

One method of incorporating proton conducting polymer into an electrocatalyst layer is a method wherein a catalyst layer is applied to a GDS, and a solution of proton conducting polymer is subsequently applied to the catalyst layer. The electrocatalyst is formulated into a catalyst ink by dispersing in water and adding a suitable binder. The catalyst ink is applied to the GDS by a suitable process such as screen printing or spraying. Thereafter a solution of proton conducting polymer is applied to the electrocatalyst layer. Such processes are described in EP 577 291.

By incorporating proton conducting polymer in the catalyst layer, it is possible to improve catalyst utilisation wherein the proportion of the platinum-based catalyst that actually takes part in the catalytic reaction is increased. The catalyst utilisation is affected by the three-phase interface between the catalyst, the gaseous reactants, and the proton-conducting polymer. Improving the catalyst utilisation can increase the MEA performance (measured as cell voltage at a given current density) without increasing the amount of platinum-based catalyst.

The problem of improving catalyst utilisation is addressed in EP 637 851. A colloidal dispersion of proton conducting polymer is mixed with a supported catalyst and applied to a GDS to produce a catalyst layer. The colloidal dispersion contains an organic solvent with a polar group other than hydroxyl, eg an ester, ether, carbonyl, amino or carboxyl group.

The present inventors have sought to find alternative methods of producing catalyst layers with high catalyst utilisation.

Accordingly, the present invention provides a process for the manufacture of a gas diffusion electrode comprising the steps of
a) application of a catalyst ink to a gas diffusion substrate;
b) firing;
c) application of a proton-conducting polymer solution; and
d) drying;
characterised in that the proton-conducting polymer solution comprises one or more solvents selected from the group of solvents with structure A 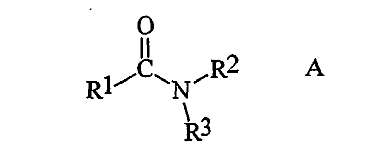 wherein R¹, R² and R³ are independently chosen from H, methyl, ethyl, n-propyl and isopropyl.

Suitably, the proton-conducting polymer solution comprises one or more solvents selected from N,N-dimethylacetamide, N,N-diethylacetamide, formamide, N-methylformamide, N,N-dimethylformamide, N-ethylacetamide, N,N-dipropylacetamide and N-methyl, N-ethylacetamide.

Preferably, the proton-conducting polymer solution comprises N,N-dimethylacetamide (R¹, R² and R³ are methyl).

The catalyst ink suitably comprises an electrocatalyst, a solvent, optionally one or more binders and optionally one or more rheology modifiers. In one embodiment of the invention, the electrocatalyst is an unsupported metal catalyst such as platinum black. In a second embodiment of the invention, the electrocatalyst is a supported metal catalyst, such as platinum or a platinum alloy supported on a conductive carbon support. The metal catalyst is dispersed in a solvent, preferably water. Suitable binders include hydrophobic polymers such as polytetrafluoroethylene (PTFE) or fluorinated ethylene-propylene (FEP). Rheology modifiers are suitably cellulose-based, such as methylcellulose.

The catalyst ink may be applied to a GDS using any technique known to those skilled in the art. Suitable techniques include screen printing, spraying, K-bar techniques and doctor blade methods.

The GDS is made of porous electrically conductive sheet material. Suitable materials include carbon fibre papers, for example those available from Toray Industries, Japan, (Toray TGP-H-60 or TGP-H-90), and woven carbon fibre cloths, for example those available from Zoltek Corporation, USA, (Zoltek PWB-3). Substrates such as these are usually modified with a particulate material either embedded within the fibre network or coated on to the large planar surfaces, or a combination of both. Typically these particulate materials comprise a carbon black and polymer mix. The particulate carbon black material is, for example, an oil furnace black such as Vulcan XC72R (from Cabot Chemicals, USA) or an acetylene black such as Shawinigan (from Chevron Chemicals, USA). The polymer most frequently used is polytetrafluoroethylene (PTFE). The coating, or embedding, is carried out in order to improve the water management properties, improve gas diffusion characteristics, to provide a continuous surface on which to apply the catalyst layer and to improve the electrical conductivity. An alternative material that has shown comparable performance to carbon paper or cloth is a substrate comprising a non-woven network of carbon fibres (carbon fibre structures such as Optimat 203, from Technical Fibre Products, UK) with a particulate material embedded within the fibre network. Such materials are disclosed in EP 0 791 974, WO 00/47816, WO 00/55933 and EP 1 063 716.

The firing step (b) is suitably carried out in air and must be carried out at a temperature that is sufficient to burn off any rheology modifiers that have been incorporated into the catalyst ink. The temperature must also be sufficient to cause any polymer binders such as PTFE to flow. A suitable firing temperature for a catalyst layer comprising PTFE is in the range 300-400°C.

The proton-conducting polymers suitable for use in the present invention may include, but are not limited to:
1) Polymers which have structures with a substantially fluorinated carbon chain optionally having attached to it side chains that are substantially fluorinated. These polymers contain sulphonic acid groups or derivatives of sulphonic acid groups, carboxylic acid groups or derivatives of carboxylic acid groups, phosphonic acid groups or derivatives of phosphonic acid groups and/or mixtures of these groups. Perfluorinated polymers include Nafion®, Flemion® and Aciplex® commercially available from E. I. DuPont de Nemours (U.S. Patents 3,282,875; 4,329,435; 4,330,654; 4,358,545; 4,417,969; 4,610,762; 4,433,082 and 5,094,995), Asahi Glass KK and Asahi Chemical Industry respectively. Other polymers include those covered in U.S. Patent 5,595,676 (Imperial Chemical Industries plc) and U.S. Patent 4,940,525 (Dow Chemical Co.).
2) Perfluorinated or partially fluorinated polymers containing aromatic rings such as those described in WO 95/08581 and WO 97/25369 (Ballard Power Systems) which have been functionalised with SO₃H, PO₂H₂, PO₃H₂, CH₂PO₃H₂, COOH, OSO₃H, OPO₂H₂ OPO₃H₂. Also included are radiation or chemically grafted perfluorinated polymers, in which a perfluorinated carbon chain, for example, PTFE, fluorinated ethylene-propylene (FEP), tetrafluoroethylene-ethylene (ETFE) copolymers, tetrafluoroethylene-perfluoroalkoxy (PFA) copolymers, poly(vinyl fluoride) (PVF) and poly(vinylidene fluoride) (PVDF) is activated by radiation or chemical initiation in the presence of a monomer, such as styrene, which can be functionalised to contain an ion exchange group.
3) Fluorinated polymers such as those disclosed in EP 0 331 321 and EP 0 345 964 (Imperial Chemical Industries plc) containing a polymeric chain with pendant saturated cyclic groups and at least one ion exchange group which is linked to the polymeric chain through the cyclic group.
4) Aromatic polymers such as those disclosed in EP 0 574 791 and US Patent 5,438,082 (Hoechst AG) for example sulphonated polyaryletherketone. Also aromatic polymers such as polyether sulphones which can be chemically grafted with a polymer with ion exchange functionality such as those disclosed in WO 94/16002 (Allied Signal Inc.).
5) Nonfluorinated polymers include those disclosed in U.S. Patent 5,468,574 (Dais Corporation) for example hydrocarbons such as styrene-(ethylene-butylene)-styrene, styrene-(ethylene-propylene)-styrene and acrylonitrile-butadiene-styrene co- and terpolymers where the styrene components are functionalised with sulphonate and/or phosphonic groups.
6) Nitrogen containing polymers including those disclosed in U.S. Patent 5,599,639 (Hoechst Celanese Corporation), for example, polybenzimidazole alkyl sulphonic acid and polybenzimidazole alkyl or aryl phosphonate.

The proton-conducting polymer solution comprising one or more of the solvents of structure A may be produced by a solvent exchange technique. Proton-conducting polymers may be purchased as solutions in a mixture of alcohols and water, eg EW1100 5% Nafion® solution available from DuPont. The solvent exchange technique can be used if the solvents of structure A have higher boiling points than the solvents in the as-purchased solution. The solvents of structure A, eg N,N-dimethylacetamide, are added to the as-purchased solution, and the lower boiling point solvents are evaporated. This may be carried out using a rotary evaporator or a fractionating column.

The proton-conducting polymer solution comprising one or more of the solvents of structure A may also be produced by dissolving a polymer in the appropriate solvent, preferably in an autoclave.

The proton-conducting polymer solution may be applied to the fired catalyst layer by techniques such as screen printing, spraying, K-bar methods or doctor blade techniques. A preferred technique is screen printing.

After the proton-conducting polymer solution has been applied, the catalyst layer is dried to remove solvent from the catalyst layer. This can be carried out in an oven with or without a vacuum. A suitable drying temperature is in the range of 100-130°C.

The present invention further provides a novel process for the manufacture of an MEA comprising the steps of
a) application of a catalyst ink to a gas diffusion substrate to form a gas diffusion electrode;
b) firing the gas diffusion electrode;
c) application of a proton-conducting polymer solution to the gas diffusion electrode;
d) optionally drying the gas diffusion electrode; and
e) combining the gas diffusion electrode with a proton conducting polymer membrane;
characterised in that the proton-conducting polymer solution comprises one or more solvents selected from the group of solvents with structure A 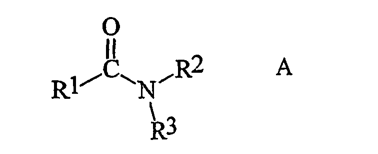 wherein R¹, R² and R³ are independently chosen from H, methyl, ethyl, n-propyl and isopropyl.

Suitably, the proton-conducting polymer solution comprises one or more solvents selected from N,N-dimethylacetamide, N,N-diethylacetamide, formamide, N-methylformamide, N,N-dimethylformamide, N-ethylacetamide, N,N-dipropylacetamide and N-methyl, N-ethylacetamide.

Preferably, the proton-conducting polymer solution comprises N,N-dimethylacetamide (R¹, R² and R³ are methyl).

Preferably, two GDEs are combined with the proton conducting polymer membrane. To combine the electrodes and the membrane, it is preferred to use a laminating process wherein the components are combined by the application of pressure, and optionally heat. Suitable MEA laminating processes are described in EP 577 291. The drying step (d) is optional because in one embodiment of the invention, the membrane and the GDE can be combined whilst the GDE is still wet, ie solvent is still present in the catalyst layer. If the lamination step is carried out using a wet GDE, it may be necessary to dry the MEA after lamination, in order to remove any residual solvent.

It is particularly appropriate to leave out drying step (d) and combine the membranes and GDE whilst the GDE is still wet if the membrane has a high glass-transition temperature (T_{g}). Certain polyaromatic polymers such as sulphonated polyaryl ether polymers are used as polymer electrolyte membranes and have a very high T_{g}. They may be combined with electrodes containing lower T_{g} polymers such as perfluorinated sulphonic acid polymers. If the lamination step is not carried out under "wet" conditions, the polymer membrane may decompose or the temperature may be too low so that the polymer membrane will not flow, and an effective bond between polymer in the membrane and polymer in the electrode will not be formed.

The proton-conducting polymer membrane may contain the same proton-conducting polymer as the proton-conducting polymer solution that is applied to the catalyst layer. However, the proton-conducting polymers in the membrane and the solution that is applied to the catalyst layer may be different.

The electrodes and MEAs manufactured according to the processes of the invention are suitable for use in fuel cells, but may also find use in other applications such as gas sensors or electrolytic reactors. The electrodes and MEAs comprising unsupported catalysts may be particularly useful when used in Direct Methanol Fuel Cells.

The invention will now be described by way of example only.

### Comparative Example 1

Electrode preparation: Two carbon fibre paper substrates (Toray TGP-H-60) were treated with PTFE, and carbon black base layers were applied to one surface of each substrate. Platinum black catalyst layers were printed onto the base layers at a loading of 4.19mg/cm². The layers were fired at 385°C in air for 16 minutes. A top-coat of ion-conducting polymer solution was brushed onto each catalyst layer. The polymer solution was an aqueous solution of Nafion®, produced as described in EP 731 520 and essentially containing water and 10wt% Nafion® polymer. The polymer coatings were dried at 105°C in air to remove the water, giving a polymer loading of 0.23mg/cm².

MEA preparation: The two electrodes were combined with a Nafion 112 membrane (DuPont) in a standard MEA lamination process, as commonly practised in the art.

### Comparative Example 2

Electrodes and an MEA were prepared as in example 1 except the loading of the Nafion® polymer on each electrode was 0.7mg/cm².

### EXAMPLE 1

Electrode preparation: A first electrode was prepared as described in comparative example 1. A second electrode was prepared in a similar manner except that the ion-conducting polymer solution was a 10wt% solution of Nafion® polymer in N,N-dimethylacetamide. The solution was produced by a solvent exchange process using as-received EW1100 Nafion® solution from DuPont. The solution was brushed onto the platinum black catalyst layer and dried at 105°C in air, giving a polymer loading of 0.32mg/cm². A second coat of the solution was brushed onto the electrode, but the second layer was not dried. This gave a wet electrode with a nominal polymer loading of 0.6mg/cm².

MEA preparation: The first and second electrodes were combined with a Nafion 112 membrane (DuPont) as in comparative example 1. The second electrode was wet (ie N,N-dimethylacetamide solvent remained in the catalyst layer) when the MEA was bonded. After the lamination step, the MEA was dried at 105°C to remove any remaining solvent.

### MEA Performance

The MEAs produced in comparative examples 1 and 2 and example 1 were tested in a fuel cell at 80°C. Hydrogen at 200kPa gauge and 100% relative humidity was supplied to the anode, and air or oxygen at 200kPa gauge and 100% relative humidity was supplied to the cathode. The reactant stoichiometry was 1.5:2 for hydrogen to air and 1.5:10 for hydrogen to oxygen (giving the same volumetric gas flow rate in both cases).

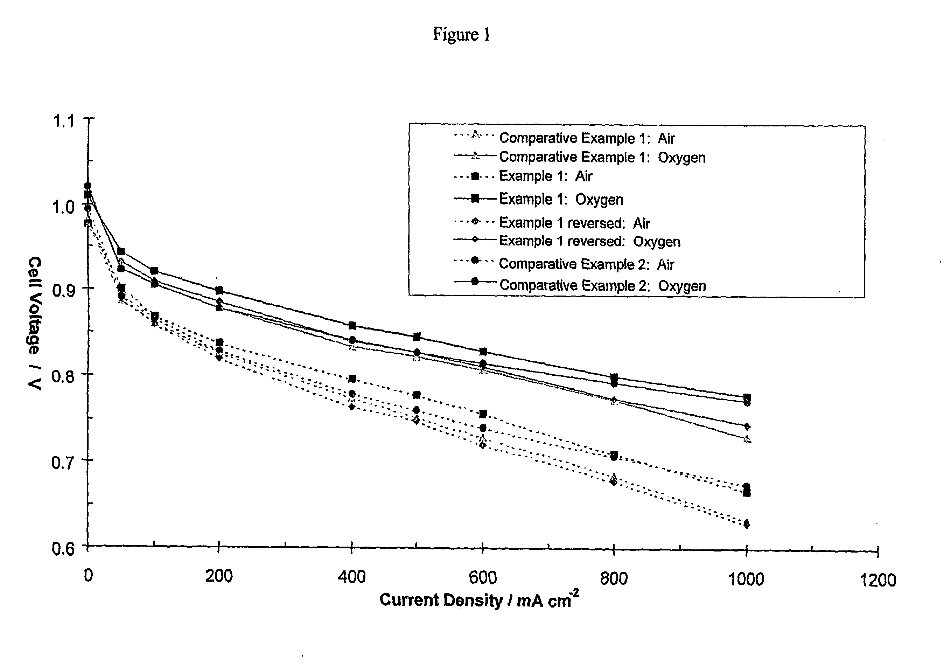

Figure 1 shows the cell voltage versus the current density for the three MEAs. There are two data sets for example 1. In a first experiment, the second electrode (made using the N,N-dimethylacetamide solution) was placed on the cathode side of the fuel cell. The data from this experiment is simply labelled "Example 1: Air/Oxygen". In a second experiment, the second electrode was placed on the anode side of the fuel cell. The data from this experiment is labelled "Example 1 reversed: Air/Oxygen". Under the conditions in the performance test (with a pure hydrogen feed) it is the cathode that limits the performance of an MEA. If the catalyst utilisation in the cathode is improved, there will be a marked improvement in the MEA performance, particularly at low current densities.

Figure 1 shows that the performance of comparative example 1 and "example 1 reversed" are comparable. There is no performance benefit gained by placing the electrode made using the N,N-dimethylacetamide solution at the anode side of the fuel cell. Comparative example 2 has a higher Nafion® loading than comparative example 1, but shows similar performance at low current densities and therefore the catalyst utilisation is not significantly altered by the increased polymer loading. Example 1 exhibits the best performance at low current densities. Placing the electrode made using the N,N-dimethylacetamide solution at the cathode side of the fuel cell produces a performance gain, demonstrating that the use of the N,N-dimethylacetamide solution improves the catalyst utilisation in the catalyst layer.

## Claims

1. A process for the manufacture of a gas diffusion electrode comprising the steps of
a) application of a catalyst ink to a gas diffusion substrate, wherein the catalyst ink comprises an electrocatalyst, a solvent, optionally one or more binders and optionally one or more rheology modifiers;
b) firing; and
c) application of a proton-conducting polymer solution;
**characterised in that** the proton-conducting polymer solution comprises one or more solvents selected from N,N-dimethylacetamide, N,N-diethylacetamide, formamide, N-methylformamide, N,N-dimethylformamide, N-ethylacetamide, N,N-dipropylacetamide and N-methyl, N-ethylacetamide.

2. A process according to claim 1, wherein the process further comprises the step of
d) drying.

3. A process according to claim 1 or claim 2, wherein the proton-conducting polymer solution comprises N,N-dimethylacetamide.

4. A process according to any preceding claim, wherein the electrocatalyst is an unsupported metal catalyst.

5. A process according to any one of claims 1 to 3, wherein the electrocatalyst is a supported metal catalyst.

6. A process according to any preceding claim, wherein the catalyst ink comprises a PTFE binder.

7. A process according to any preceding claim, wherein the proton-conducting polymer solution comprises a perfluorinated polymer.

8. A process for the manufacture of a membrane electrode assembly comprising a process for the manufacture of a gas diffusion electrode according to any preceding claim; and a step of
e) combining the gas diffusion electrode with a proton conducting polymer membrane.

## Patentansprüche

1. Verfahren zur Herstellung einer Gasdiffusionselektrode, umfassend die folgenden Stufen:
a) Aufbringen einer Katalysatortinte auf ein Gasdiffusionssubstrat, wobei die Katalysatortinte einen Elektrokatalysator, ein Lösemittel, gegebenenfalls ein oder mehrere Bindemittel und gegebenenfalls einen oder mehrere Rheologiemodifikator(en) umfasst;
b) Brennen und
c) Aufbringen einer Proton leitenden Polymerlösung,
**dadurch gekennzeichnet, dass** die Proton leitende Polymerlösung ein oder mehrere Lösemittel umfasst, das/die ausgewählt ist/sind aus N,N-Dimethylacetamid, N,N-Diethylacetamid, Formamid, N-Methylformamid, N,N-Dimethylformamid, N-Ethylacetamid, N,N-Dipropylacetamid und N-Methyl, N-Ethylacetamid.

2. Verfahren nach Anspruch 1, wobei das Verfahren ferner die folgende Stufe umfasst:
d) Trocknen.

3. Verfahren nach Anspruch 1 oder Anspruch 2, wobei die Proton leitende Polymerlösung N,N-Dimethylacetamid umfasst.

4. Verfahren nach einem beliebigen vorstehenden Anspruch, wobei der Elektrokatalysator für einen nicht geträgerten Metallkatalysator steht.

5. Verfahren nach einem der Ansprüche 1 bis 3, wobei der Elektrokatalysator für einen geträgerten Metallkatalysator steht.

6. Verfahren nach einem beliebigen vorstehenden Anspruch, wobei die Katalysatortinte ein PTFE-Bindemittel umfasst.

7. Verfahren nach einem beliebigen vorstehenden Anspruch, wobei die Proton leitende Polymerlösung ein perfluoriertes Polymer umfasst.

8. Verfahren zur Herstellung einer Membranelektrodenanordnung, umfassend ein Verfahren zur Herstellung einer Gasdiffusionselektrode nach einem beliebigen vorstehenden Anspruch und eine Stufe von
e) Kombinieren der Gasdiffusionselektrode mit einer Proton leitenden Polymermembran.

## Revendications

1. Procédé pour la fabrication d'une électrode de diffusion de gaz comprenant les étapes suivantes :
a) application d'une encre de catalyseur à un substrat de diffusion de gaz, où l'encre de catalyseur comprend un électrocatalyseur, un solvant, et de façon optionnelle un ou plusieurs liants et de manière optionnelle un ou plusieurs agents de modification de rhéologie,
b) cuisson, et
c) application d'une solution de polymère conducteur de protons,
**caractérisé en ce que** la solution de polymère de conduction de protons comprend un ou plusieurs solvants sélectionnés parmi le N,N-diméthylacétamide, le N,N-diéthylacétamide, le formamide, le N-méthylformamide, le N,N-diméthylformamide, le N-éthylacétamide, le N,N-dipropylacétamide et le N-méthyl ou N-éthyl-acétamide.

2. Procédé selon la revendication 1, dans lequel le procédé comprend en outre l'étape de
d) séchage.

3. Procédé selon la revendication 1 ou la revendication 2, dans lequel la solution de polymère conducteur de protons comprend du N,N-diméthylacétamide.

4. Procédé selon l'une quelconque des revendications précédentes, dans lequel l'électrocatalyseur est un catalyseur de métal non supporté.

5. Procédé selon l'une quelconque des revendications 1 à 3, dans lequel l'électrocatalyseur est un catalyseur de métal supporté.

6. Procédé selon l'une quelconque des revendications précédentes, dans lequel l'encre de catalyseur comprend un liant de polytétrafluoréthylène (PTFE).

7. Procédé selon l'une quelconque des revendications précédentes, dans lequel la solution de polymère conducteur de protons comprend un polymère perfluoré.

8. Procédé pour la fabrication d'un ensemble d'électrodes de membrane comprenant un procédé pour la fabrication d'une électrode de diffusion de gaz conformément à l'une quelconque des revendications précédentes, et une étape de
e) combinaison de l'électrode de diffusion de gaz avec une membrane de polymère conducteur de protons.
